## Europäisches Patentamt

## European Patent Office

## Office européen des brevets

(11) Veröffentlichungsnummer: **0 215 152 B1**

---

(12) **EUROPÄISCHE PATENTSCHRIFT**

(45) Veröffentlichungstag der Patentschrift:
27.06.90

(51) Int. Cl.⁵: **G21C 1/06**

(21) Anmeldenummer: **85111805.9**

(22) Anmeldetag: **18.09.85**

---

(54) Verfahren zur Beschickung eines Kugelhaufenkernreaktors und dafür geeignete Kugelhaufenreaktoren.

(43) Veröffentlichungstag der Anmeldung:
**25.03.87 Patentblatt 87/13**

(45) Bekanntmachung des Hinweises auf die Patenterteilung:
**27.06.90 Patentblatt 90/26**

(84) Benannte Vertragsstaaten:
**AT BE CH DE FR GB IT LI LU NL SE**

(56) Entgegenhaltungen:
**BE-A- 668 635
DE-A- 2 923 639
DE-B- 1 439 785
GB-A- 938 120
GB-A- 1 036 935
GB-A- 1 056 246
US-A- 3 039 945
US-A- 3 321 376**

**TECHNISCHE MITTEILUNGEN KRUPP, Band 25, Nr. 1/2, Juli 1967, Seiten 37-45; D. BEDENIG et al.: "Indirekte Messmethoden zur Untersuchung von Fliessvorgängen in Kugelschüttungen"**

(73) Patentinhaber: **Forschungszentrum Jülich GmbH, Postfach 1913, D-5170 Jülich(DE)**

(72) Erfinder: **Teuchert, Eberhardt, Dr., Franziskusstrasse 2, D-5170 Jülich(DE)**
Erfinder: **Haas, Klaus-Arne, Münsterweg 4, D-5160 Düren(DE)**
Erfinder: **Gerwin, Helmut, Dr., Otto-Hahn-Strasse 3, D-5170 Jülich(DE)**

---

## Beschreibung

Die Erfindung bezieht sich auf ein Verfahren zur Beschickung eines Kugelhaufenreaktors mit Kugeln unterschiedlichen Spaltstoffgehalts und sie umfaßt einen dafür geeigneten Kugelhaufenreaktor.

Eine wesentliche Besonderheit des Kugelhaufenreaktors besteht in der Möglichkeit, laufend Kugeln aus dem Reaktor abzuziehen, d.h. aus dem Druckbehälter auszuschleusen. Neue Elemente werden durch Beschickungsrohre im Deckenreflektor zugefüllt. Das Be- und Entladen geschieht unter vollem Leistungsbetrieb des Reaktors kontinuierlich bzw. quasikontinuierlich. Die Zeitabstände zwischen zwei Beschickungsvorgängen sind so kurz gewählt, daß keine wesentlichen Reaktivitätsschwankungen auftreten, die durch zusätzliches neutronenabsorbierendes Material kompensiert werden müßten. Sie liegen im Bereich zwischen einigen Sekunden und einigen Tagen.

Bei solchen Reaktoren kann eine günstige Leistungsdichteverteilung und ein hoher Wirkungsgrad erreicht werden. Allerdings erfordert das Abziehen der Brennelemente unter vollem Leistungsbetrieb eine relativ aufwendige technische Einrichtung. Etwa 1-2 Meter der Bauhöhe des Druckbehälters sind erforderlich, um den trichterförmigen Kugelabzug, die Kugelvereinzelungsanlage und die Druckschleuse zu umschließen. Diese Einrichtungen sind für Reparaturen schwer zugänglich. Ferner erfordern die Anlagen zur Abfüllung der entladenen hochradioaktiven Elemente einen erheblichen baulichen Aufwand, da die Handhabung ferbedient und unter Abschirmung erfolgen muß. Der Betrieb und die Wartung der Entladeeinrichtungen sowie der laufende Abtransport der Brennelemente erfordern die ständige Anwesenheit von qualifiziertem Personal.

Bekannt sind - andere - Reaktortypen mit diskontinuierlicher Beschickungsweise, die in bestimmten Zeitabständen, beispielsweise im Jahresrythmus für einige Tage oder Wochen stillgelegt, abgekühlt und druckentlastet werden, um die Brennelemente zu wechseln. Im Betriebszyklus zwischen zwei Beschickungsvorgängen müssen zusätzliche Neutronenabsorber eingesetzt werden, um die abbrandbedingte Reaktivitätsänderung auszugleichen. Anwendung finden zusätzliche Regelstäbe, Borsäure im Kühlmittel oder abbrennbare n-Absorbermaterialien. Der Einsatz dieser Absorbermaterialien belastet den Neutronenhaushalt, wodurch sich die Konversions- bzw. Brutrate vermindert, und er bringt ein gewisses Sicherheitsrisiko durch die Möglichkeit eines fehlerhaften Entfernens aus dem Reaktor mit sich.

Der Erfindung liegt nun die Aufgabe zugrunde, eine solche Reaktorbeschickung vorzusehen, bei der sowohl die wirtschaftlichen Nachteile und Risiken des bekannten "Batch-Betriebs" entfallen als auch eine komplizierte Ausschleusung von Elementen unter Leistung vermieden wird.

Dieses Ziel wird gemäß der Erfindung dadurch erreicht, daß die Erstbeladung derart bemessen ist, daß die Kritikalität unter der für den Reaktor vorgesehenen Leistungsbedingung bereits erzielt wird, wenn die Core-Kaverne erst zum Teil mit Brennelementen angefüllt ist; daß während der anschließenden Betriebszeit des Reaktors dann kontinuierlich oder quasi kontinuierlich frische Elemente in dem Maße zugefüllt werden, wie zur Aufrechterhaltung der Kritikalitätsbedingung erforderlich ist und daß die Entladung der Kugeln auf einmal erfolgt.

Ein dafür geeigneter Kugelhaufenreaktor ist mithin gekennzeichnet durch eine Auslegung für anfängliche (Teil)beschickung und anschließendes Nachladen in Abhängigkeit vom Abbrand.

Weitere Besonderheiten gehen aus den Unteransprüchen hervor.

Bei dieser Beschickungsart wird die Erstbeladung derart bemessen, daß die Kritikalität ($K_{eff} = 1$) unter der für den Reaktor vorgesehenen Leistungsbedingung bereits erzielt wird, wenn die Core-Kaverne erst zum Teil, zweckmäßigerweise zu 1/4 bis 2/3, insbesondere zu einem Drittel mit Brennelementen angefüllt ist. Während der anschließenden Betriebszeit des Reaktors werden dann kontinuierlich oder quasi kontinuierlich frische Elemente zugefüllt, und zwar in dem Maße, wie zur Aufrechterhaltung der Kritikalitätsbedingung erforderlich ist. Wenn schließlich die Reaktorkaverne voll gefüllt ist, wird eine Abschaltung, Abkühlung und Druckentlastung des Reaktors durchgeführt, und alle Brennelemente werden auf einmal entladen. Eine solche Entladung kann etwa nach 2 bis 5 Betriebsjahren erfolgen, bei Reaktoren mit kleinen Leistungsdichten, die als Heizwerke konzipiert werden können, nach 15- bis 30jährigem Betrieb.

Für diese Gesamtentladung, die ggf. auch vor einer vollständigen Füllung der Kaverne vorgenommen werden kann, ist eine Kugelabzugseinrichtung am Core-Boden zwar nützlich aber nicht notwendigerweise erforderlich. Stattdessen kann die Core-Kaverne auch von oben mit Hilfe einer mechanischen Fördereinrichtung oder nach dem Staubsaugerprinzip geleert werden. Die Entladeeinrichtung kann sukzessive zur Entleerung verschiedener Reaktoren eingesetzt werden, welche in dieser Weise betrieben werden.

Ihre Herstellungskosten verteilen sich dementsprechend auf die Energiekosten mehrerer Reaktoren. Das Gleiche gilt für die Betriebs- und Personalkosten, die durch die Bedienung dieser Einrichtungen anfallen.

Bei dieser Beschickungsweise gestaltet sich die Entladung der Brennelemente erheblich einfacher als bei herkömmlicher Beschickung, da der Reaktor abgeschaltet, kalt und ohne Druck ist. Gleichzeitig aber bleibt der Vorteil des Kugelhaufenreaktors gegenüber anderen Reaktoren erhalten, der darin besteht, daß keine Absorbermaterialien eingesetzt zu werden brauchen, um eine durch den Abbrandzyklus bedingte Überschußreaktivität zu binden.

Aus wirtschaftlichem Grund ist anzustreben, daß bei dieser neuen Beschickungsweise die gleiche thermische Leistung wie beim Betrieb des Reaktors in einer herkömmlichen Beschickungsweise erbracht werden kann. Da die Anfangsfüllung die Core-Kaverne nur zum Teil ausfüllt, muß die mittlere Leistungsdichte im Anfangszustand gegenüber einer vollen Core-Kaverne entsprechend vergrößert sein. Um hierbei ein Überschreiten der zulässigen Leistung pro Brennelement (5,7 KW/Kugel) zu vermeiden, wird eine möglichst gleichmäßige räumliche Verteilung der Leistungsdichte in dem mit Kugeln gefüllten Volumen angestrebt. Dieses wird erreicht, indem für die Erstbeladung wenigstens zwei verschiedene Brennelementtypen mit unterschiedlichen Spaltstoffgehalten benutzt werden. Im nachfolgend beschriebenen Auslegungsbeispiel werden die unteren zwei Drittel der "Erstfüllung" mit Elementen versehen, deren Spaltstoffgehalt (z. B. um 12 %) niedriger als der mittlere Wert liegt, das obere Drittel wird mit Elementen mit einem (z. B. um 24 %) höheren Spaltstoffgehalt beladen.

Ferner ist aus Gründen der Wirtschaftlichkeit anzustreben, daß bei der Entladung des Cores der Abbrand im Mittel vergleichbar mit dem bei herkömmlicher Beschickungsweise erzielten Abbrand (70-100 MWd/Kg (Schwermetall)) liegt. In einer Auslegungsrechnung zeigt sich, daß dieses insbesondere zu erreichen ist, wenn der Spaltstoffgehalt in den Nachladeelementen um das 1,5 bis 2,5fache, vorzugsweise um das 1,9fache höher als der mittlere Spaltstoffgehalt der anfänglichen Teilbeschickung ist.

Bei der rechnerischen Simulation des langsamen Auffüllens des Reaktors mit Elementen eines einheitlichen Spaltstoffgehaltes zeigt sich, daß die erforderliche Zufüllrate frischer Elemente pro Tag gegen Ende der Betriebsperiode geringer wird, daß andererseits die maximale Leistungsbelastung der Kugeln zu Beginn und gegen Ende relativ hoch ist. Um dem zu begegnen, können auch zum Nachladen Kugeln mit unterschiedlichem Spaltstoffgehalt eingesetzt werden. Eine vorausrechnende Computersimulation kann die günstigsten Brennelementbeladungen und -spaltstoffgehalte ermitteln.

Bei der vorliegenden Beschickungsweise mit über lange Zeit ruhendem Core tritt - anders als bei Kugelhaufenreaktoren mit kontinuierlichem Kugelumlauf - eine zunehmende Kugelverdichtung (Zunahme der Zahl der Kugeln pro Volumeneinheit) auf. Regel- und Abschaltstäbe werden daher bei kleinen Reaktoren in den umgebenden Reflektor eingefahren und bei größeren Reaktoren, die nicht mehr vom Graphitreflektor aus geregelt werden können, sind vorzugsweise ein oder mehrere säulen- oder rippenförmige Graphiteinbauten vorgesehen, in welche ein Neutronenabsorber eingeführt werden kann. Die Konstruktion derartiger Säulen ist gegenüber einer solchen in herkömmlichen Kugelhaufenreaktoren erheblich vereinfacht, da keine ständige Bewegung des Kugelbettes zu den Abzugskanälen hin stattfindet und die damit verbundenen Krafteinwirkungen entfallen.

Bei der erfindungsgemäß relativ langen Aufenthaltsdauer der Kugeln im Core wird zweckmäßigerweise durch langsames Einfüllen und zusätzliche Maßnahmen - wie ein die geordnete Füllung erzwingender Dellenboden - für eine möglichst geordnete Kugelfüllung der Kaverne gesorgt, bei der eine dichte Kugelpackung, hohe Leistungsdichte und eine Gleichverteilung der Druckbelastung auf die vorhandenen Kugeln vorliegt.

Eine solche geordnete Füllung wird insbesondere durch einen Quadratgitter-Dellenboden der Core-Kaverne unterstützt, durch den beim Einfüllen der Kugeln - ausgehend von der untersten Lage - eine bestmögliche Kugelordnung herbeigeführt wird. Um Kugeldehnungen durch thermisches Verhalten und Abbrand über die Lebensdauer hinweg zu berücksichtigen, sollte der Dellenboden vorzugsweise einen minimalen Dellenabstand haben, der geringfügig - insbesondere um 1 bis 10 % vorzugsweise um etwa 5 % - größer ist als der Kugeldurchmesser.

Die Quadratgitter-Dellenanordnung hat gegenüber der vermeintlichen optimalen hexagonalen Kugelanordnung den Vorteil, daß bei der Überschichtung der 1. Kugellage mit weiteren Kugeln nur Vorzugslagen (jeweils mittig über vier Kugeln der Unterlage) existieren, die Soll-Lagen sind. Dadurch ergibt sich bei der Corefüllung unwillkürlich der bestmögliche Ordnungszustand mit maximaler räumlicher Dichte der Kugeln, die unter 45 ° betrachtet Schichten mit hexagonal dichtester Packung bilden mit einem theoretisch ermittelbaren Füllfaktor von 0,74.

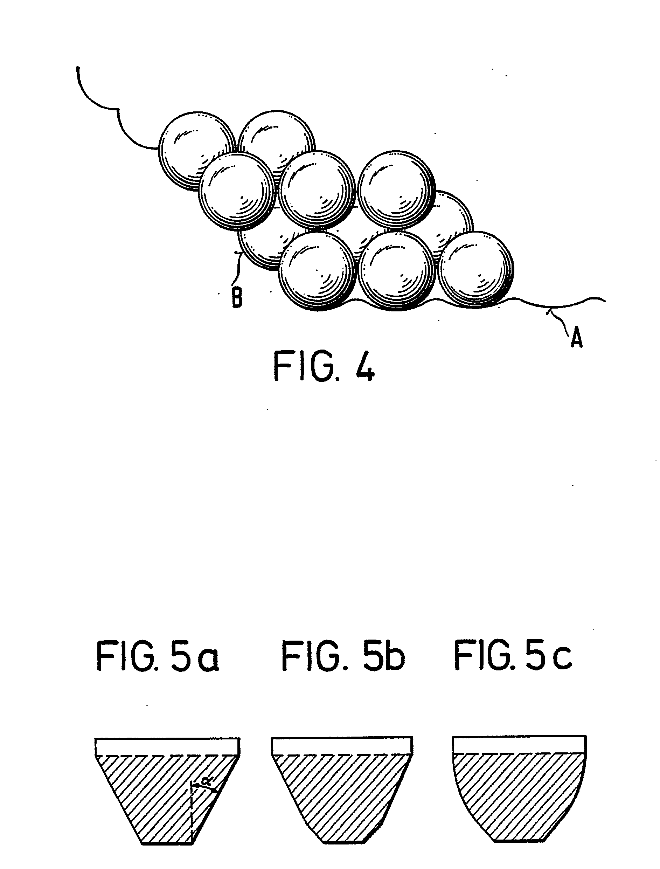

Der erhebliche Unterschied zwischen Kugeldurchmesser und Kavernendurchmesser läßt gewisse Unordnungen in Wandnähe bei einer zylindrischen Kaverne als tolerabel erscheinen. Gegebenenfalls kann jedoch auch der Kavernenquerschnitt und die Innenwand der Kugelordnung angepaßt ausgebildet werden. So kann die Wand entsprechend ganzzahligen Vielfachen der Kugelabmessung dimensioniert und mit senkrechten Rippen versehen werden, so daß auch benachbart zur Wand geordnete Kugellagen entstehen können. Zur Vermeidung einer nicht gewollten Begünstigung von an sich labilen Kugelpositionen im Randbereich (z. B. Anordnung einer Kugel der versetzten Schicht senkrecht über einer solchen der Unterschicht) sind die Krümmungsradien der zwischen den Rippen gebildeten Rinnen größer als der Kugelradius, wie aus Figure 4 ersichtlich ist. Als Beispiel zeigt Fig. 4 einen horizontalen (Teil-)Querschnitt eines achteckigen Cores, das - ordnungsbedingt - durch zwei unterschiedliche Wandtypen A und B begrenzt wird. Typ A wird zweckmäßigerweise mit senkrechten Rippen der angedeuteten Art versehen, während Typ B glatt oder mit senkrechten Rippungen wie angedeutet versehen sein kann.

Ähnlich einfach ausgebildet ist die erforderliche Rippenstruktur bei rechteckigem, allgemeiner bei $2^n$-eckigen Querschnitt der Kaverne (n=2,3,4 ,....) Allgemeiner ergibt sich eine zweckmäßige Wandstruktur aus dem gewählten Grundriß der Kaverne und der diesem einbeschriebenen geordneten Kugelfüllung im wesentlichen als die Rand-Einhüllende der beiden gegeneinander versetzten Kugelschichten.

Eine Seitenwandentlastung, wie sie durch eine geordnete Kugelfüllung mit Seiten-Spiel erreicht wird, kann auch durch einen von unten nach oben zunehmenden Core-Querschnitt erzielt werden, wie er in Fig. 5 angedeutet ist. Dabei kann eine kegelstumpfförmige Mantelfläche mit einer Neigung gegen die Vertikale (Winkel $\alpha$) zwischen 15° und 45°, vorzugsweise von etwa 25°, vorgesehen werden (Fig. 5 a).

Noch günstiger ist es, im unteren Core-Bereich, beispielsweise im unteren Drittel, den Neigungswinkel größer als im oberen Bereich zu wählen (siehe Fig. 5 b), wobei Winkel um 45° im unteren Bereich und um 25° im oberen Bereich besonders bevorzugt sind.

Optimal ist is, den Vertikalschnitt der Core-Kaverne derart gewölbt auszubilden, daß die senkrecht wirkende Komponente der Kraft auf die Behälterwand in allen Höhenpositionen gleich groß ist. Dies gelingt durch eine Formgebung des Kavernenquerschnittes, die näherungsweise durch $R = R_0 - a (Z - Z_0)^2$ gegeben ist (siehe Fig. 5c). In dieser Gleichung bedeuten R den Abstand von der Mittelachse der Core-Kaverne, $R_0$ den Radius an der Oberfläche der Kugelschüttung, Z die Höhenposition, $Z_0$ die Höhenposition an der Oberfläche der Kugelschüttung und a ergibt sich rechnerisch aus der für die Wand zulässigen Belastung.

Es folgt ein Auslegungsbeispiel unter Bezugnahme auf die angefügten Zeichnungen. Diese zeigen:

Figur 1 Ein Schema für einen Kugelhaufenreaktor-Behälter gemäß der Erfindung;
Figur 2 Temperatur- und Leistungsdichtekurven für einen solchen Reaktor zu unterschiedlichen Zeiten;

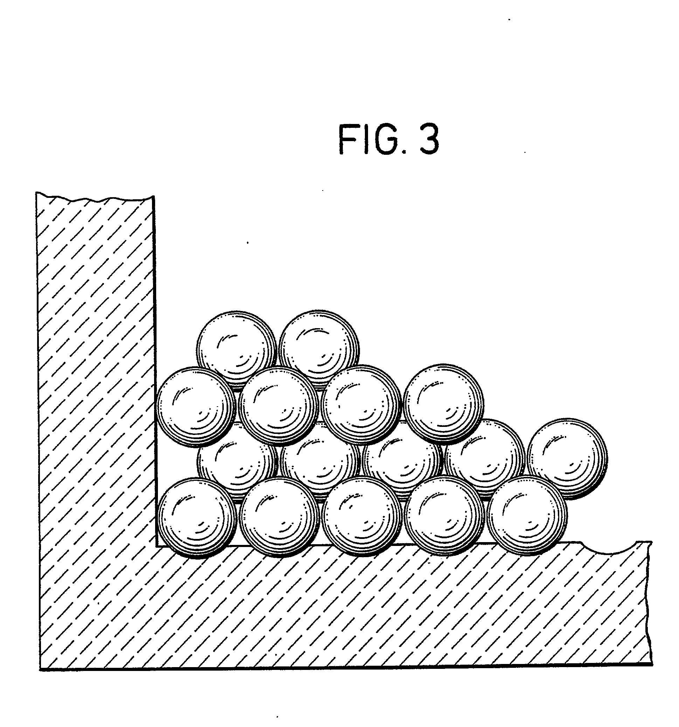

Figur 3 deutet einen Dellenboden an;
Figur 4 eine Teilaufsicht auf ein achteckiges Core; und
Figur 5 unterschiedliche Kavernenformen mit Querschnittserweiterung von unten nach oben.

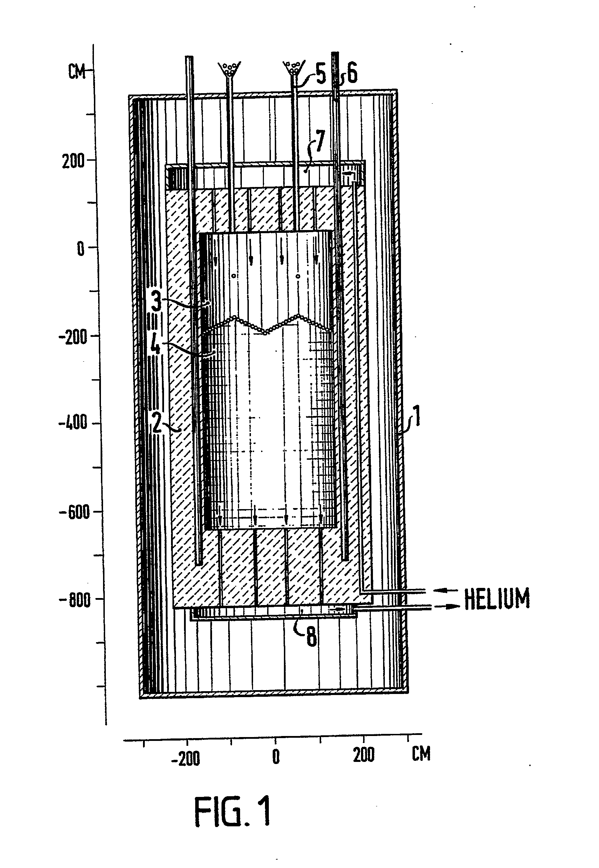

Gemäß Figur 1 befindet sich im Druckbehälter 1 der Graphitreflektor 2 mit Hohlraum 3, der die Kugelschüttung 4 aufnimmt. Diese wird über Beschickungs- und Entladungsrohre 5 beschickt, bzw. entladen. Regelstäbe 6 sind im Reflektor vorgesehen. Die Kugelschüttung wird durch Helium gekühlt, das von unten her von dort in den Hohlraum 3 strömt und nach Verlassen der Kugelschüttung 4 aus einem unteren Heißgassammelraum 8 abgezogen wird.

Die Core-Kaverne hat ein Volumen von 46 m³, und die erzeugte thermische Leistung beträgt 200 MW. Das Kühlmittel Helium strömt abwärts und wird von 250°C auf 700°C erwärmt. Die Brennelemente mit einem Durchmesser von 6 cm enthalten UO₂ als Brennstof in Form von "Coated Particles". Bei der Anfangsbeladung wird 1/3 der Core-Kaverne mit Brennelementen gefüllt. Die unteren 2/9 werden mit Kugeln mit der Urananreicherung 5%, darüber 1/9 mit der Anreicherung 7% beladen. Hierdurch wird die Kritikalität erreicht. Während des Leistungsbetriebes werden peu à peu Elemente mit der Anreicherung 10.7% zugeladen. Anfangs beträgt die Zuladung 350 Kugeln pro Tag und gegen Ende der Betriebsperiode 210 Kugeln pro Tag. Sie bestimmt sich aus der Forderung, kontinuierlich die Kritikalität des Reaktors aufrecht zu erhalten. Nach 611 Vollasttagen ist der Reaktor vollgefüllt und muß entladen werden. Der Abbrand beträgt im Mittel 74 MWd/Kg$_{SM}$, im Maximum 105 MWd/Kg$_{SM}$.

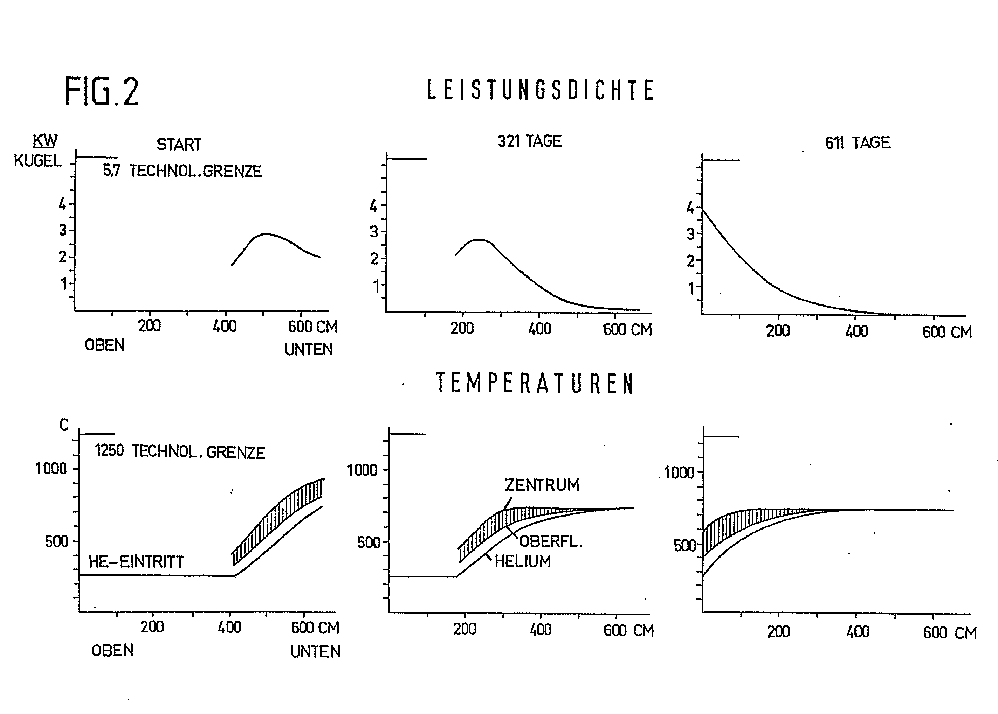

Die Leistungsverteilung in axialer Richtung ist anfangs relativ gleichmäßig und symmetrisch. Im Verlauf des Vollfüllens verlagert sich das Maximum zum oberen Bereich hin, in welchem sich die frisch zugeladenen Kugeln befinden (siehe Fig. 2). Das Maximum der Brennstofftemperatur variiert während der Betriebsperiode zwischen 735°C und 910°C, es bleibt damit jederzeit erheblich unter der zulässigen Maximaltemperatur von 1250°C.

Bei der Simulation eines Störfalles, bei dem angenommen wird, daß das Helium aus dem Reaktor entweicht, ergibt die Rechnung eine Maximaltemperatur von 2005°C. Eine Veränderung der Reaktorauslegung, bei der eine Graphit-Mittelsäule mit einem Radius von 85 cm vorgesehen und dementsprechend der Radius der Kaverne um 22 cm vergrößert wird, ergibt eine Verminderung der Brennelementmaximaltemperatur im Störfall bis auf 1430°C. Bei dieser reduzierten Maximaltemperatur wird eine Diffusion der Spaltprodukte aus den Coated Particles heraus vermieden.

**Patentansprüche**

1. Verfahren zur Beschickung eines Kugelhaufenreaktors mit Kugeln unterschiedlichen Spaltstoffgehalts, dadurch gekennzeichnet, daß die Erstbeladung derart bemessen ist, daß die Kritikalität unter der für den Reaktor vorgesehenen Leistungsbedingung bereits erzielt wird, wenn die Core-Kaverne erst zum Teil mit Brennelementen angefüllt ist; daß während der anschließenden Betriebszeit des Reaktors dann kontinuierlich oder quasi kontinuierlich frische Elemente in dem Maße zugefüllt werden, wie zur Aufrechterhaltung der Kritikalitätsbedingung erforderlich ist und daß die Entladung der Kugeln auf einmal erfolgt.

2. Verfahren nach Anspruch 1, dadurch gekennzeichnet, daß die Entladung nach vollständiger Füllung der Kaverne vorgenommen wird.

3. Verfahren nach Anspruch 1 oder 2, gekennzeichnet durch eine anfängliche Teilbeschickung von 1/4 bis 2/3.

4. Verfahren nach Anspruch 3, gekennzeichnet durch eine anfängliche Teilbeschickung von 1/3 des Cores.

5. Verfahren nach einem der Ansprüche 1 bis 4, dadurch gekennzeichnet, daß die unteren zwei Drittel der anfänglichen Teilbeschickung einen geringeren und ihr oberes Drittel einen höheren Spaltstoffgehalt haben als der für die Kritikalität der anfänglichen Teilbeschickung zugrundegelegte Mittelwert.

6. Verfahren nach Anspruch 5, dadurch gekennzeichnet, daß die unteren zwei Drittel der anfänglichen Teilbeschickung einen um ca. 12 % geringeren und ihr oberes Drittel einen um ca. 24 % höheren Spaltstoffgehalt haben als der für die Kritikalität der anfänglichen Teilbeschickung zugrundegelegte Mittelwert.

7. Verfahren nach einem der vorangehenden Ansprüche, dadurch gekennzeichnet, daß der Spaltstoffgehalt der Nachladeelemente um das 1,5- bis 2,5-fache höher ist als der mittlere Spaltstoffgehalt der Elemente der anfänglichen Teilbeschickung.

8. Verfahren nach Anspruch 7, dadurch gekennzeichnet, daß der Spaltstoffgehalt der Nachladeelemente um das 1,9-fache höher ist als der mittlere Spaltstoffgehalt der Elemente der anfänglichen Teilbeschickung.

9. Verfahren nach einem der vorangehenden Ansprüche, dadurch gekennzeichnet, daß die Core-Entladung von oben her erfolgt.

10. Verfahren nach einem der vorangehenden Ansprüche, gekennzeichnet durch eine geordnete Kugelfüllung bzw. -teilfüllung der Kaverne mit Brennelementen.

11. Kugelhaufenreaktor zur Durchführung des Verfahrens nach einem der vorangehenden Ansprüche mit einer Kaverne zur Aufnahme der Brennelemente, einer Kugelerstbeschickung, Mitteln zur Brennelementbe- und -entladung, einem Wärmeabfuhrsystem mit Wärmetauschern, Kühlkreis und Gebläsen sowie einem Regel- und Abschaltsystem mit Absorber mit ausreichender Absorberwirkung im Bereich maximaler Reaktorleistung, gekennzeichnet durch

- ein Kavernenvolumen zur Aufnahme einer unter Last kritischen Kugelerstbeschickung, die nur einen Teil des Volumens einnimmt,
- lediglich für die Einschleusung, nicht jedoch für die Ausschleusung unter Last eingerichtete Brennelementbe- und -entlademittel,
- Gebläse des Wärmeabfuhrsystems mit einem dem zunehmenden Strömungswiderstand bei fortlaufender Auffüllung der Kaverne entsprechenden variablen Leistungsvermögen; und
- eine Absorbersteuerung zur ausreichenden kritikalitätsmindernden Steuerung im mit der zunehmenden Auffüllung der Kaverne und Reaktorbetriebsdauer räumlich veränderten Bereich maximaler Leistung.

12. Kugelhaufenreaktor nach Anspruch 11, gekennzeichnet durch Kugelentnahmeeinrichtungen am oberen Kavernenende.

13. Kugelhaufenreaktor nach Anspruch 12, gekennzeichnet durch einen Dellenboden zur Unterstützung einer geordneten Core-Beschickung.

14. Kugelhaufenreaktor nach Anspruch 13, gekennzeichnet durch einen Dellenboden mit einer Quadratgitteranordnung der Dellen und einem minimalen Dellenabstand (Kreuzungspunktabstand), der größer ist als der Brennelementkugeldurchmesser.

15. Kugelhaufenreaktor nach Anspruch 14, dadurch gekennzeichnet, daß der Dellenabstand um 1 bis 10 %, insbesondere um etwa 5 % größer ist als der Brennelementkugeldurchmesser.

16. Kugelhaufenreaktor nach Anspruch 14 oder 15, gekennzeichnet durch einen $2^n$-eckigen (n = 2, 3, 4 ...) Kavernenquerschnitt, dessen Kantendimension einem ganzzahligen Vielfachen des Brennelementkugeldurchmessers angepaßt ist.

17. Kugelhaufenreaktor nach einem der Ansprüche 13 bis 16, gekennzeichnet durch eine die gewünschte Kugelordnung einhüllende Rippung bzw. Bosselung der Kaverneninnenwand.

18. Kugelhaufenreaktor nach Anspruch 11 oder 12, gekennzeichnet durch einen von unten nach oben zunehmenden Kavernenquerschnitt.

19. Kugelhaufenreaktor nach Anspruch 18, gekennzeichnet durch eine kegelstumpfförmige Mantelfläche mit einer Neigung gegen die Vertikale zwischen 15 und 45°, vorzugsweise von etwa 25°.

20. Kugelhaufenreaktor nach Anspruch 19, dadurch gekennzeichnet, daß das untere Drittel der Mantelfläche einen Neigungswinkel von ca. 45° und die oberen zwei Drittel einen Neigungswinkel von ca. 25° gegen die Vertikale aufweisen.

21. Kugelhaufenreaktor nach Anspruch 18, dadurch gekennzeichnet, daß die Behälterinnenwand im Vertikalschnitt etwa der Gleichung $R = R_0 - a (Z - Z_0)^2$ genügt, wobei R der senkrechte Abstand der Wand von der Mittelachse der Core-Kaverne, $R_0$ dieser Abstand an der Oberfläche der Kugelschüttung, Z die Höhenposition, $Z_0$ die Höhenposition an der Oberfläche der Kugelschüttung und a eine Wertzahl für die zulässige Wandbelastung ist.

22. Kugelhaufenreaktor nach einem der Ansprüche 11 bis 21, gekennzeichnet durch Graphitsäulen bzw. -rippen in der Core-Kaverne zur Aufnahme der Neutronen-Absorber für Abschaltung und Regelung.

## Claims

1. Method of charging a pebble bed reactor with pebbles of different fissile material content, characterized in that the first load is dimensioned such that criticality under the power condition intended for the reactor is already achieved when the core cavern is only partially filled with fuel elements; in that during the subsequent operating time of the reactor fresh elements are then continuously or virtually continuously filled in to the extent necessary for maintaining the criticality condition and in that the unloading of the pebbles takes place all at once.

2. Method according to Claim 1, characterized in that the unloading is performed after complete filling of the cavern.

3. Method according to Claim 1 or 2, characterized by an initial partial charge of 1/4 to 2/3.

4. Method according to Claim 3, characterized by an initial partial charge of 1/3 of the core.

5. Method according to one of Claims 1 to 4, characterized in that the lower two thirds of the initial partial charge have a lower fissile material content and its upper third has a higher fissile material content than the average value on which the criticality of the initial partial charge is based.

6. Method according to Claim 5, characterized in that the lower two thirds of the initial partial charge have a fissile material content which is about 12% lower and its upper third has a fissile material content which is about 24% higher than the average value on which the criticality of the initial partial charge is based.

7. Method according to one of the preceding claims, characterized in that the fissile material content of the reload elements is 1.5 to 2.5 times higher than the average fissile material content of the elements of the initial partial charge.

8. Method according to Claim 7, characterized in that the fissile material content of the reload elements is 1.9 times higher than the average fissile material content of the elements of the initial partial charge.

9. Method according to one of the preceding claims, characterized in that the core unloading takes place from above.

10. Method according to one of the preceding claims, characterized by an ordered pebble filling or partial filling of the cavern with fuel elements.

11. Pebble bed reactor for carrying out the method according to one of the preceding claims, with a cavern for receiving the fuel elements, a first pebble charge, means for fuel element loading and unloading, a heat removal system with heat exchangers, coolant loop and blowers as well as a control and shut-down system with absorbers having adequate absorber effect in the region of maximum reactor power, characterized by

- a cavern volume for receiving a first pebble charge, critical under load, which only takes up a part of the volume,
- fuel element loading and unloading means, set up only for inward transfer, but not for outward transfer under load,
- blowers of the heat removal system having a variable output capacity, corresponding to the increasing flow resistance in continuous filling of the cavern; and
- an absorber control for adequate criticality-reducing control in the region of maximum power, spatially altered with the increasing filling of the cavern and duration of reactor operation.

12. Pebble bed reactor according to Claim 11, characterized by pebble removing devices at the upper end of the cavern.

13. Pebble bed reactor according to Claim 12, characterized by a dimpled bottom for assisting an ordered core charging.

14. Pebble bed reactor according to Claim 13, characterized by a dimpled bottom having a square grid arrangement of the dimples and a minimum dimple spacing (crosspoint spacing) which is greater than the fuel element pebble diameter.

15. Pebble bed reactor according to Claim 14, characterized in that the dimple spacing is 1 to 10%, in particular about 5% greater than the fuel element pebble diameter.

16. Pebble bed reactor according to Claim 14 or 15, characterized by a $2^n$-cornered ($n = 2, 3, 4 \ldots$) cavern cross-section, the edge dimension of which is adapted to an integral multiple of the fuel element pebble diameter.

17. Pebble bed reactor according to one of Claims 13 to 16, characterized by a ribbing or bossing of the cavern inside wall, enveloping the desired pebble order.

18. Pebble bed reactor according to Claim 11 or 12, characterized by a cavern cross-section increasing from bottom to top.

19. Pebble bed reactor according to Claim 18, characterized by a frustoconical circumferential surface having an inclination to the vertical of between 15 and 45°, preferably of about 25°.

20. Pebble bed reactor according to Claim 19, characterized in that the lower third of the circumferential surface has an angle of inclination of about 45° and the upper two thirds have an angle of inclination of about 25° the vertical.

21. Pebble bed reactor according to Claim 18, characterized in that the vessel inside wall in vertical section approximately fulfils the equation $R = R_0 - a(Z-Z_0)^2$, R being the perpendicular distance of the wall from the centre axis of the core cavern, $R_0$ being this distance at the surface of the pebble bed, Z being the vertical position, $Z_0$ being the vertical position at the surface of the pebble bed and a being a figure for the permissible wall loading.

22. Pebble bed reactor according to one of Claims 11 to 21, characterized by graphite columns or ribs in the core cavern for receiving the neutron absorbers for shut-down and control.

**Revendications**

1. Procédé de chargement d'un réacteur à lit de boulets, dont les boulets ont des teneurs différentes en matière fissile, caractérisé en ce qu'il consiste à effectuer le premier chargement de manière à obtenir la criticité dans les conditions de puissance prévues pour le réacteur, dès que la caverne formant le coeur n'est garnie que partiellement d'éléments combustibles ; puis à charger de façon continue ou quasi-continue, pendant la durée ultérieure de fonctionnement du réacteur, des éléments frais dans la mesure nécessaire au maintien de la condition de criticité et à effectuer le déchargement des boulets d'un seul coup.

2. Procédé suivant la revendication 1, caractérisé en ce qu'il consiste à effectuer le déchargement après le garnissage complet de la caverne.

3. Procédé suivant la revendication 1 ou 2, caractérisé par un chargement partiel initial du 1/4 au 2/3.

4. Procédé suivant la revendication 3, caractérisé par un chargement partiel initial du 1/3 du coeur.

5. Procédé suivant l'une des revendications 1 à 4, caractérisé en ce que les deux-tiers inférieurs du chargement partiel initial ont une teneur en matières fissiles plus faible, et le tiers supérieur a une teneur en matières fissiles plus élevée que la valeur moyenne prise pour base pour la criticité du chargement partiel initial.

6. Procédé suivant la revendication 5, caractérisé en ce que les deux-tiers inférieurs du chargement partiel initial ont une teneur en matières fissiles plus faible de 12 % environ et le tiers supérieur a une teneur en matières fissiles plus élevée de 24 % environ que la valeur moyenne prise pour base pour la criticité du chargement partiel initial.

7. Procédé suivant l'une des revendications précédentes, caractérisé en ce que la teneur en matières fissiles des éléments de post-chargement est plus élevée de 1,5 à 2,5 fois que la teneur moyenne en matières fissiles des éléments du chargement partiel initial.

8. Procédé suivant la revendication 7, caractérisé en ce que la teneur en matières fissiles des éléments de post-chargement est plus élevée de 1,9 fois que la teneur moyenne en matières fissiles des éléments du chargement partiel initial.

9. Procédé suivant l'une des revendications précédentes, caractérisé en ce qu'il consiste à effectuer le déchargement du cœur par le haut.

10. Procédé suivant l'une des revendications précédentes, caractérisé par un garnissage ou par un garnissage partiel ordonné de la caverne, à l'aide d'éléments combustibles.

11. Réacteur à lit de boulets pour la mise en œuvre du procédé suivant l'une des revendications précédentes, comprenant une caverne de réception des éléments combustibles, un premier chargement de boulets, des moyens de chargement et de déchargement des éléments combustibles, un système d'évacuation de la chaleur comprenant des échangeurs de chaleur à circuit de refroidissement et des soufflantes, ainsi qu'un système de régulation et d'arrêt comprenant des absorbeurs ayant une action d'absorption suffisante dans la région de puissance maximum du réacteur, caractérisé par,

- un volume de la caverne de réception d'un premier chargement de boulets critique sous charge, qui n'occupe qu'une partie du volume,
- des moyens de chargement et déchargement des éléments combustibles, agencés simplement pour l'introduction, mais non pour l'évacuation sous charge,
- des soufflantes du système d'évacuation de la chaleur, ayant une puissance variable en fonction de la résistance croissante à l'écoulement, lorsque le chargement de la caverne se poursuit; et
- une commande des absorbeurs destinée à commander, de manière à diminuer suffisamment la criticité, dans la région de puissance maximum qui varie dans l'espace, au fur et à mesure qu'augmente le chargement de la caverne et en fonction de la durée de fonctionnement du réacteur.

12. Réacteur à lit de boulets suivant la revendication 11, caractérisé par des dispositifs d'enlèvement des boulets à l'extrémité supérieure de la caverne.

13. Réacteur à lit de boulets suivant la revendication 12, caractérisé par un fond bosselé pour favoriser un garnissage ordonné du cœur.

14. Réacteur à lit de boulets suivant la revendication 13, caractérisé par un fond bosselé ayant un agencement en réseau carré des bosses et une distance minimum entre les bosses (distance aux points de croisement), qui est supérieure au diamètre du boulet de l'élément combustible.

15. Réacteur à lit de boulets suivant la revendication 14, caractérisé en ce que la distance entre les bosses est supérieure de 1 à 10 % et notamment de 5 % environ au diamètre des boulets d'éléments combustibles.

16. Réacteur à lit de boulets suivant la revendication 14 ou 15, caractérisé par une section transversale de la caverne à $2^n$-sommets ($n = 2, 3, 4 ...$), dont la dimension des côtés correspond à un multiple entier du diamètre des boulets d'éléments combustibles.

17. Réacteur à lit de boulets suivant l'une des revendications 13 à 16, caractérisé par un nervurage ou un bosselage de la paroi intérieure de la caverne enveloppant la disposition souhaitée des boulets.

18. Réacteur à lit de boulets suivant la revendication 11 ou 12, caractérisé par une section transversale de caverne augmentant de bas en haut.

19. Réacteur à lit de boulets suivant la revendication 18, caractérisé par une surface latérale tronconique inclinée de 15 à 45° et, de préférence, de 25° environ par rapport à la verticale.

20. Réacteur à lit de boulets suivant la revendication 19, caractérisé en ce que le tiers inférieur de la surface latérale est incliné par rapport à la verticale de 45° environ, et les deux-tiers supérieurs sont inclinés, par rapport à la verticale, de 25° environ.

21. Réacteur à lit de boulets suivant la revendication 18, caractérisé en ce que la paroi intérieure de la cuve satisfait, en coupe verticale, sensiblement à l'équation $R = R_0 - a (Z - Z_0)^2$, R étant la distance de la paroi à l'axe médian de la caverne du cœur, $R_0$ étant cette distance à la surface du tas de boulets, Z étant la position en hauteur, $Z_0$ étant la position en hauteur de la surface du tas de boulets, et a étant un nombre représentant la charge admissible sur la paroi.

22. Réacteur à lit de boulets suivant l'une des revendications 11 à 21, caractérisé par des colonnes ou des nervures de graphite dans la caverne du cœur destinées à la réception des absorbeurs de neutrons pour la mise à l'arrêt et pour la régulation.

FIG. 1

# FIG.2

## LEISTUNGSDICHTE

**KW KUGEL** | START
5,7 TECHNOL.GRENZE

4
3
2
1

200   400   600 CM
OBEN          UNTEN

321 TAGE

4
3
2
1

200   400   600 CM

611 TAGE

4
3
2
1

200   400   600 CM

## TEMPERATUREN

C
1250 TECHNOL. GRENZE

1000

500

HE-EINTRITT

200   400   600 CM
OBEN          UNTEN

1000

500

ZENTRUM
OBERFL.
HELIUM

200   400   600 CM

1000

500

200   400   600 CM

EP 0 215 152 B1

# FIG. 3

EP 0 215 152 B1

FIG. 4

FIG. 5a   FIG. 5b   FIG. 5c